# EUROPÄISCHE PATENTSCHRIFT

(11) **EP 1 053 449 B1**
(45) Veröffentlichungstag und Bekanntmachung des Hinweises auf die Patenterteilung: **25.09.2002**
(21) Anmeldenummer: 99934203.3
(22) Anmeldetag: 27.01.1999
(51) Int. Cl.: G01B 21/04, B25J 9/16

(54) **NAVIGATIONSKULISSE ZUR VERMESSUNG VON OBJEKTEN UND VERFAHREN ZU DEREN VERWENDUNG**
NAVIGATION LINK FOR MEASURING OBJECTS AND METHOD OF ITS USE
COULISSE DE NAVIGATION POUR MESURER DES OBJETS ET METHODE DE SON UTILISATION

(30) Priorität: 02.02.1998 DE 19803942
(43) Veröffentlichungstag der Anmeldung: 22.11.2000
(73) Patentinhaber: DaimlerChrysler AG, 70567 Stuttgart (DE)
(72) Erfinder: Ziegler, Marcus, 81247 München (DE)
(86) Internationale Anmeldenummer: DE9900195
(87) Internationale Veröffentlichungsnummer: WO99039158

(56) Entgegenhaltungen:
- WO-A-91/03706
- WO-A-95/20747
- DE-A- 19 536 294
- DE-U- 29 618 726
- DE-U- 29 708 830
- R.MALZ: "Ein neues optisches 3D-Messverfahren für Reverse Engineering." QUALITÄT UND MIKROECHNIK,31. Oktober 1997, Seiten 41-1-14-8, XP002106505 Buchs,Schweiz in der Anmeldung erwähnt

## Beschreibung

Die Erfindung betrifft eine Vorrichtung zur Verwendung als Navigationskulisse bei der optischen Vermessung von Objekten gemäß Oberbegriff des Patentanspruchs 1. Eine solche Navigationskulisse ist bereits aus bekannt siehe R. Malz; Ein neues optisches 3D-Meßsystem für Reverse Engineering", Tagungsband der Fachtagung "Qualität und Mikrotechnik", 30./31.10.1997, Buchs, Schweiz; und DE 195 36 294 A1). Aus der WO - A - 91 03 706 ist ein Prüfkörper für die Kalibrierung und die Überprüfung der Meßqualität taktiler Koordinatenmeßgeräte bekannt.

Derartige Navigationskulissen werden auf dem Gebiet der optischen dreidimensionalen Koordinaten-Meßtechnik, bei der Inspektion und Positionskontrolle von Objekten, insbesondere von Kraftfahrzeugen, benötigt. Dort besteht, auf Grund der begrenzten Meßvolumina der zur Verfügung stehenden Sensoren, die Notwendigkeit, die Meßdaten für ausgedehnte Objekte mosaikartig aus einzelnen Teilmessungen zusammenzusetzen. Um eine genaue Zusammenfügung der Meßdaten der einzelnen Teilmessungen zu erlauben, wird für die Gesamtdauer der verschiedenen Teilmessungen ein relativ zum Meßobjekt ortsfestes Referenznetz aus Meßpunkten benötigt. Typischerweise ist bei Meßobjekten in der Größenordnung von einigen Metern eine Ortsbestimmtheit von circa 10 bis 50 Mikrometern erforderlich. Zur Definition des Referenznetzes werden sogenannte Navigationskulissen verwendet, welche die benötigten Meßpunkte in Form vom Meßmarken tragen. Anhand der Meßpunkte des Referenznetzes werden die einzelnen Teilansichten verschiedener Teilmessungen nachträglich zu einem Gesamtdatensatz zusammengefügt.

Nach bisherigem Stand der Technik werden die Meßobjekte häufig selbst zu ihren eigenen Navigationskulissen gemacht, indem man die Meßmarken meist direkt auf dem zu vermessenden Objekt anbringt, d.h. in der Regel wird das zu vermessende Objekt mit den Meßmarken beklebt. Ein derartiges Anbringen dieser Meßmarken und ihre Entfernung sind aufgrund der bisweilen hohen benötigten Anzahl sehr zeitaufwendig und nicht unwesentliche Teile der Oberfläche des Meßobjekts werden durch die aufgeklebten Meßmarken verdeckt. Darüber hinaus ist die Oberfläche des zu vermessenden Objektes häufig nicht eben genug, um die Meßmarken optisch genau genug anzumessen. (Die relevanten Bereiche einer Meßmarke haben typischerweise Durchmesser zwischen 3 und 12 Millimetern und diese relevanten Bereiche sollten auf einer exakten Ebene angebracht sein.)

Außerdem wurde bereits vorgeschlagen, für kleinere Objekte Navigationskulissen in Form von Meßkäfigen zu verwenden. Deren Verwendung ist jedoch nur sinnvoll, solange sie eine räumliche Ausdehnung von circa 1 Kubikmeter oder eine Masse von circa 20 kg nicht übersteigen. Oberhalb dieser Grenzen werden Meßkäfige zum einen unhandlich, d.h. insbesondere schwierig zu transportieren, d.h. der Vorteil eines mobilen Vermessungssystems geht verloren. Zum anderen leidet auf Grund des Bemühens, die Masse des Meßkäfigs gering zu halten, häufig dessen Stabilität und damit die erforderliche genaue Ortsbestimmtheit der Meßpunkte.

Aber selbst wenn das zu vermessende Objekt klein genug ist und somit die eben genannten Nachteile eines Meßkäfigs vermieden werden können, treten andere Nachteile auf. Das zu vermessende Objekt wird bei den bereits vorgeschlagenen Verfahren in den Meßkäfig gelegt und somit ist die Unterseite des Objektes für eine Vermessung unzugänglich. Für eine vollständige Vermessung muß es gedreht werden. Dabei entstehen allerdings Datensätze, die nur unter der Verwendung weiterer - in der Regel aufwendiger - mathematischer Methoden zu einem Gesamtdatensatz verbunden werden können. Daraus resultieren meist hohe Einbußen an Vermessungs-Geschwindigkeit und ebenfalls Einbußen an Genauigkeit.

Die Aufgabe der vorliegenden Erfindung besteht daher darin, eine leicht transportierbare Vorrichtung anzugeben, die es erlaubt, eine größere Anzahl Meßmarken auf einmal, also in ihrer Gesamtheit, zumindest für den Meßzeitraum stabil, in einer jeweils festen Raumposition relativ zu dem zu vermessenden Objekt anzuordnen und auch wieder auf einmal von dem zu vermessenden Objekt entfernen zu können und zwar derart, daß damit sowohl die Meßbarkeit des Objekts möglichst wenig durch Verdeckungen eingeschränkt wird, als auch die erforderliche Stabilität des Referenznetzes über den gesamten Meßzeitraum gewährleistet wird.

Die Erfindung ist in Bezug auf die zu schaffende Vorrichtung durch die Merkmale des Patentanspruchs 1 wiedergegeben. Die weiteren Ansprüche enthalten vorteilhafte Ausgestaltungen und Weiterhildungen der erfindungsgemäßen Vorrichtung (Patentansprüche 2 bis 10) sowie ein vorteilhaftes Verfahren und eine Weiterbildung dieses Verfahrens zur Anwendung der erfindungsgemäßen Vorrichtung (Patentansprüche 11, 12).

Die Aufgabe wird bezüglich der zu schaffenden Vorrichtung erfindungsgemäß dadurch gelöst, daß die Vorrichtung zur Verwendung als Navigationskulisse im Wesentlichen ein Bauelement mit Gitterstruktur enthält,
- auf dem mehrere Meßmarken angebracht sind, und
- an dem mehrere Verbindungsstege angebracht sind, an deren dem Bauelement abgewandter Seite jeweils eine Befestigungsvorrichtung angebracht ist.

Für die Vermessung eines Objektes wird mindestens eine solche Vorrichtung mittels der Befestigungsvorrichtungen an ihren Verbindungsstegen auf dem Objekt befestigt und "schwebt" dann über dem Objekt. Die Vermessung des Objektes erfolgt dann aus mehreren Blickwinkeln durch die Maschen der Gitterstruktur der mindestens einen Vorrichtung hindurch.

Ein wesentlicher Vorteil einer solchen Vorrichtung und ihrer Verwendung als Navigationskulisse besteht in ihrer einfachen und schnellen Handhabung bezüglich Anbringung und Entfernung. Eine oder mehrere derartige Vorrichtungen können darüber hinaus für weitere Messungen wiederverwendet werden und bezüglich ihrer Anordnung auf dem jeweiligen Meßobjekt neu kombiniert werden, während die nach der konventionellen Verfahrensweise auf dem Meßobjekt aufgeklebten Meßmarken bei der Entfernung meist beschädigt oder komplett zerstört werden und demnach nicht wiederverwendet werden können.

Ein weiterer wesentlicher Vorteil der erfindungsgemäßen Vorrichtung und ihrer Verwendung als Navigationskulisse besteht hinsichtlich der Anzahl verdeckter und damit nicht oder nur schlechter zu vermessender Positionen auf der Oberfläche des zu vermessenden Objektes. Bei den konventionellen Verfahren mit Anbringung der Meßmarken direkt auf der Oberfläche des zu vermessenden Objektes wird auf Grund deren meist benötigter hoher Anzahl eine entsprechend hohe Anzahl von Orten verdeckt, während bei Verwendung der erfindungsgemäßen Vorrichtung nur die Orte verdeckt werden, auf denen die Befestigungsvorrichtungen aufliegen, und deren Anzahl meist wesentlich geringer ist, als die der benötigten Meßmarken. Der von dem gitterartigen Bauelement auf das zu vermessende Objekt geworfene Meß-Schatten beeinträchtigt die Vermessung nicht, da er auf Grund der Vermessung aus mehreren Blickwinkeln nicht ortsfest ist und somit aus dem Meßergebnis herausgerechnet werden kann.

Wesentliche Vorteile einer solchen Vorrichtung gegenüber der Verwendung eines Meßkäfigs bestehen vor allem in der besseren Transportierbarkeit, aber auch in der leichteren Handhabung bei der Vermessung des Objektes und in der meist höheren Stabilität bezogen auf das Meßvolumen und den Konstruktions- und Materialaufwand der Navigationskulisse. Diese Vorteile wachsen überproportional mit der Größe des zu vermessenden Objektes.

In einer vorteilhaften Ausführungsform dieser Vorrichtung ist die Gitterstruktur ein-, zwei- oder drei-dimensional, vorzugsweise zwei-dimensional, aufgebaut und sie besteht aus mehreren, vorzugsweise gleichartigen Elementarzellen, deren räumliche Abmessungen variabel sind, und/oder deren Anzahl variabel ist. Die Vorteile dieser Ausgestaltung liegen in ihrer einfachen Bauweise bei gleichzeitig hoher Formstabilität und leichter Transportierbarkeit. Darüber hinaus ermöglicht die Variabilität der Elementarzellen in Hinsicht auf ihre Abmessungen und Anzahl eine optimale Anpassung der Vorrichtung an die Erfordernisse des jeweils zu vermessenden Objektes.

In einer Ausbildung dieser Vorrichtung ist die Gitterstruktur rechtwinklig aufgebaut. Die Vorteile dieser Ausbildung bestehen in dem besonders niedrigen konstruktiven Aufwand bei gleichzeitig hoher Formstabilität.

In einer weiteren vorteilhaften Ausbildung dieser Vorrichtung besitzt die Gitterstruktur ebene Oberflächen, deren Mindestabmessungen gleich denen der Meßmarken sind und deren Flächennormalen vorzugsweise parallel ausgerichtet sind. Die wesentlichen Vorteile dieser Ausbildung liegen darin, daß eine optimale optische Ausmeßbarkeit der auf diesen Flächen angebrachten Meßmarken gewährleistet ist.

Weitere vorteilhafte Ausgestaltungsmerkmale der genannten Vorrichtung bestehen darin, daß die Gitterstruktur in Leichtbauweise ausgeführt ist, derart, daß sie
- aus mindestens meßmarkenbreiten Schienen aufgebaut ist, vorzugsweise bestehend aus
   - Leichtmetall, vorzugsweise Aluminium, oder aus
   - formstabilem Kunststoff, vorzugsweise CFK, (kohlenstofffaserverstärkter Kunststoff)
   oder daß sie
- aus einem formstabilen Drahtgeflecht aufgebaut ist, auf welchem meßmarkengroße, ebene Platten, vorzugsweise variabel in ihrer Positionierung, angebracht sind.

Die Leichtbauweise ermöglicht einen hohe Transportierbarkeit, die benötigte Formstabilität wird gewährleistet und die meßmarkenbreiten Schienen beziehungsweise die variabel in ihrer Positionierung auf dem Drahtgeflecht angebrachten, meßmarkengroßen, ebenen Platten erlauben eine in Hinsicht auf das zu vermessende Objekt optimale Anpassung der Meßmarkenpositionierung auf der Gitterstruktur.

Weitere vorteilhafte Ausgestaltungsmerkmale der genannten Vorrichtung bestehen darin, daß sie genau drei Verbindungsstege enthält, welche
- vorzugsweise in möglichst großer Entfernung untereinander und
- vorzugsweise in möglichst großer radialer Entfernung vom Schwerpunkt der Gitterstruktur
auf der den Meßmarken gegenüberliegenden Seite der Gitterstruktur an der Gitterstruktur angebracht sind.

Eine Drei-Punkt-Befestigung der Gitterstruktur mittels ihrer Verbindungsstege auf dem zu vermessenden Objekt ist optimal hinsichtlich Stabilität und Spannungsfreiheit. Die möglichst große Entfernung der Verbindungsstege untereinander und zum Schwerpunkt der Gitterstruktur erhöht die Stabilität weiter.

Weitere vorteilhafte Ausgestaltungsmerkmale der genannten Vorrichtung bestehen darin, daß die Verbindungsstege jeweils eine Einrichtung zur Einstellung und Arretierung ihrer räumlichen Ausrichtung relativ zur Gitterstruktur und eine Einrichtung zur Einstellung und Arretierung ihrer Länge beinhalten.

Der Vorteil dieser Ausgestaltung besteht darin, daß mittels der Einstelleinrichtung die räumliche Orientierung der Vorrichtung und damit die räumliche Orientierung der auf ihr befindlichen Meßmarken optimal an die jeweilige Vermessungsaufgabe bzw. an das jeweils zu vermessende Objekt angepaßt werden kann. Mittels der Arretierung wird dann die Ortsbestimmtheit der Meßmarken über den Meßzeitraum gewährleistet.

Ein besonders vorteilhaftes weiteres Ausgestattungsmerkmal der genannten Vorrichtung besteht darin, daß die Einrichtung zur Einstellung und Arretierung der räumlichen Ausrichtung eines Verbindungssteges relativ zur Gitterstruktur ausgebildet ist in Form eines arretierbaren Kugelgelenkes, und/oder, daß die Einrichtung zur Einstellung und Arretierung der Länge eines Verbindungssteges ausgebildet ist in Form von gegeneinander verschiebbaren und arretierbaren Stangen oder ineinander verschiebbaren und arretierbaren Rohren.

Der Vorteil dieser Ausgestaltung besteht darin, daß hier auf allgemein gebräuchliche Bauteile zurückgegriffen wird, welche anerkanntermaßen die erforderliche Funktionalität und gleichzeitig geringe Störungs- oder Verschleißanfälligkeit bei geringem Raumbedarf und niedrigem Gewicht aufweisen.

Ein weiteres vorteilhaftes Ausgestaltungsmerkmal der genannten Vorrichtung besteht darin, daß die Befestigungsvorrichtung an jedem Verbindungssteg mit diesem verbunden ist über eine Einrichtung zur Einstellung und Arretierung ihrer räumlichen Ausrichtung, vorzugsweise über ein arretierbares Kugelgelenk.

Der Vorteil dieser Ausgestaltung besteht darin, daß die Positionierung der Vorrichtung relativ zum zu vermessenden Objekt auf dieses Art und Weise weitgehend unabhängig ist von der Neigung der Oberfläche an dem für die Befestigung der Vorrichtung auf dem Objekt gewünschten Punkt der Oberfläche.

Ein weiteres vorteilhaftes Ausgestaltungsmerkmal der genannten Vorrichtung besteht darin, daß die Befestigungsvorrichtung an jedem Verbindungssteg ausgebildet ist in Form von Saugnäpfen oder von einer magnetischen, elektrostatischen oder adhäsiven Haftvorrichtung oder von einer mechanischen Befestigungsvorrichtung, vorzugsweise in Form einer Klemm-, Steck- oder Schraubverbindung. Der Vorteil dieser Ausgestaltung besteht darin, daß die Vorrichtung so auf einfache Weise auf dem zu vermessenden Objekt befestigt und auch wieder von diesem gelöst werden kann ohne es zu beschädigen.

Besonders vorteilhaft angewendet wird ein Verfahren zur optischen Vermessung von Objekten, bei dem mehrere Teilmessungen der Objekte unter Verwendung einer Navigationskulisse zu einem Gesamtdatensatz zusammengefügt werden, wenn als Navigationskulisse eine oder mehrere der vorbeschriebenen Vorrichtungen Anwendung finden und zwar derart,
- daß eine Vorrichtung als Navigationskulisse verwendet wird, wenn das zu vermessende Objekt kleinere oder ähnliche Abmessungen aufweist wie die Vorrichtung, und
- daß mehrere Vorrichtungen als Navigationskulisse verwendet werden, wenn die Abmessungen des zu vermessenden Objektes die Abmessungen der Vorrichtung um ein Mehrfaches überschreiten.

Der Vorteil eines derartigen Verfahrens besteht darin, daß Standardroutinen zur optischen Ausmessung des zu vermessenden Objektes und zur automatisierten Zusammenfügung der Datensätze aus den verschiedenen Teilmessungen - wie sie beispielsweise bei direkter Beklebung des Objektes mit Meßmarken Anwendung finden - auch bei Verwendung der Vorrichtung als Navigationskulisse weiter angewendet werden können, also weder ein neuer Programmierbedarf noch Schulungsbedarf des Bedienungspersonals entsteht. Gleichzeitig bestehen aber die bereits bei der Beschreibung der Vorrichtung genannten Vorteile gegenüber Verfahren, bei denen herkömmliche Navigationskulissen verwendet werden.

Eine weitere vorteilhafte Ausgestaltung dieses Verfahrens besteht darin, daß eine vorbeschriebene Vorrichtung mit dreidimensionaler Gitterstruktur in Form eines Meßkäfigs als Navigationskulisse verwendet wird und das zu vermessende Objekt mittels der Verbindungsstege im Inneren der Navigationskulisse befestigt wird, wenn das zu vermessende Objekt eine räumliche Ausdehnung von circa 1 Kubikmeter nicht überschreitet.

Der Vorteil einer derartigen Ausgestaltung besteht darin, daß so - im Gegensatz zur bekannten Verwendung eines üblichen Meßkäfigs - auch die Unterseite des Objektes für die Vermessung zugänglich bleibt und keine Umpositionierung des Objektes für dessen vollständige Vermessung notwendig ist. Gleichzeitig bleibt die Navigationskulisse aber auf Grund der Größenbeschränkung leicht transportierbar und formstabil.

Im Folgenden werden anhand der Figuren 1 bis 4 zwei beispielhafte Ausführungen der erfindungsgemäßen Vorrichtung näher erläutert. Es zeigen
- Figur 1: Eine erste bevorzugte Ausführungsform der erfindungsgemäßen Vorrichtung mit zweidimensionaler Gitterstruktur.
- Figur 2: Ein konstruktives Detail der Vorrichtung gemäß Figur 1.
- Figur 3: Eine zweite bevorzugte Ausführungsform der erfindungsgemäßen Vorrichtung mit dreidimensionaler Gitterstruktur.
- Figur 4: Bevorzugte Anordnung eines zu vermessenden Objektes relativ zu der Vorrichtung gemäß Figur 3.

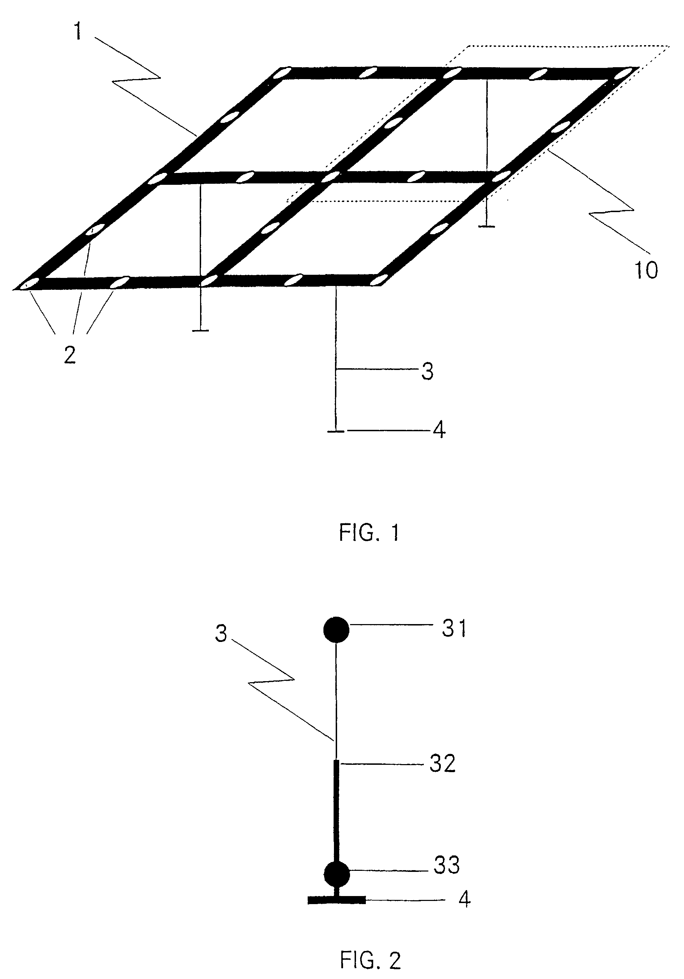

Die Figur 1 stellt schematisch und nicht maßstabsgerecht eine Vorrichtung zur Verwendung als Navigationskulisse dar, bestehend aus einem Bauelement 1 mit zweidimensionaler Gitterstruktur, auf dem mehrere Meßmarken 2 angebracht sind, und an dem mehrere Verbindungsstege 3 angebracht sind, an deren dem Bauelement 1 abgewandter Seite jeweils eine Befestigungsvorrichtung 4 angebracht ist.

Die Figur 2 stellt schematisch und nicht maßstabsgerecht einen Verbindungssteg 3 dar, beinhaltend eine Einrichtung zur Einstellung und Arretierung seiner räumlichen Ausrichtung relativ zur Gitterstruktur 31 (hier skizziert in Form eines arretierbaren Kugelgelenkes) und eine Einrichtung zur Einstellung und Arretierung seiner Länge 32 (hier skizziert in Form ineinander verschiebbarer und arretierbarer Rohre) sowie eine Befestigungsvorrichtung 4, die mit dem Verbindungssteg 3 verbunden ist über eine Einrichtung zur Einstellung und Arretierung ihrer räumlichen Ausrichtung 33 (hier skizziert in Form eines arretierbaren Kugelgelenkes).

Die Gitterstruktur des Bauelementes 1 ist zweidimensional und aus vier gleichartigen Elementarzellen 10 derart aufgebaut, daß sie die Form eines Rechteckes aufweist . Eine Elementarzelle 10 ist rechtwinklig, hier quadratisch, aufgebaut und damit ist auch die Gitterstruktur des Bauelementes 1 rechtwinklig aufgebaut. In diesem Ausführungsbeispiel weist das Bauteil mit Gitterstruktur eine Kantenlänge von 60 Zentimetern auf.

Die Gitterstruktur des Bauelementes 1 ist in Leichtbauweise (hier aus Aluminium) aus meßmarkenbreiten Schienen aufgebaut. (Die Schienenbreite beträgt in diesem Ausführungsbeispiel 2 Zentimeter.) Die Schienen besitzen über ihre gesamte Länge eine ebene Oberfläche und ermöglichen so eine hohe Variabilität für die Positionierung von Meßmarken 2. Die Schienen sind so angeordnet, daß ihre Flächennormalen parallel ausgerichtett sind.

An dem Bauelement 1 mit Gitterstruktur sind auf der den Meßmarken 2 gegenüberliegenden Seite drei Verbindungsstege 3 angebracht. Jeder Verbindungssteg 3 weist an seiner der Gitterstruktur zugewandten Seite eine Einrichtung zur Einstellung und Arretierung seiner räumlichen Ausrichtung relativ zur Gitterstruktur 31 auf (in Fig. 2 skizziert in Form eines arretierbaren Kugelgelenkes), danach folgt eine Einrichtung zur Einstellung und Arretierung seiner Länge 32 (in Fig. 2 skizziert in Form ineinander verschiebbarer und arretierbarer Rohre). An der dem Bauelement 1 abgewandten Seite besitzt jeder Verbindungssteg 3 eine Befestigungsvorrichtung 4, welche mit dem Verbindungssteg 3 verbunden ist über eine Einrichtung zur Einstellung und Arretierung ihrer räumlichen Ausrichtung 33 (hier skizziert in Form eines arretierbaren Kugelgelenkes). Die Befestigungsvorrichtung 4 ist in diesem Ausführungsbeispiel in Form einer magnetischen Haftvorrichtung ausgebildet.

Die erfindungsgemäße Vorrichtung erweist sich in der Ausführungsform des vorstehend beschriebenen Beispiels als besonders geeignet für die optische, dreidimensionale Koordinaten-Meßtechnik, bei der Inspektion und Positionskontrolle von Objekten, insbesondere von Kraftfahrzeugen. Hierzu werden mehrere Vorrichtungen auf dem Objekt befestigt und dienen als Navigationskulisse für dessen Vermessung. Die Vermessung selbst und auch die rechentechnischen Verfahren zur Zusammenfügung der Meßdaten aus verschiedenen Teilmessungen des Objektes unterscheiden sich nicht von einem konventionellen Verfahren, bei dem das mit Meßmarken beklebte Objekt selbst als Navigationskulisse dient. Bei Objekten, die ähnliche Abmessungen aufweisen wie die Vorrichtung, genügt die Verwendung einer einzigen Vorrichtung als Navigationskulisse.

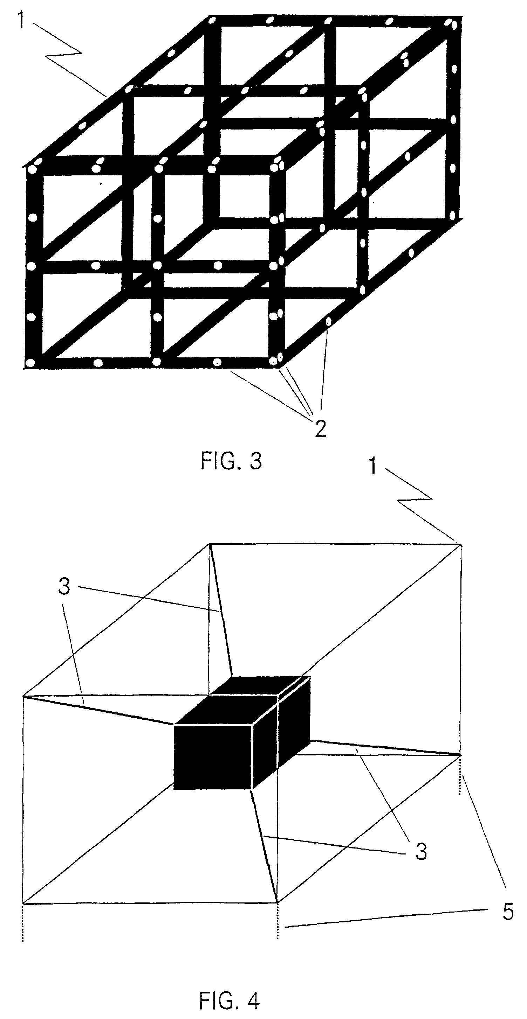

Die Figur 3 stellt schematisch und nicht maßstabsgerecht eine zweite Vorrichtung zur Verwendung als Navigationskulisse dar, bestehend aus einem Bauelement 1 mit dreidimensionaler Gitterstruktur in Form eines Meßkäfigs, auf dem allseitig, d.h. auch auf der Unterseite, Meßmarken 2 angebracht sind. Eine Seite des Bauelementes kann zur Einbringung des zu vermessenden Objektes geöffnet werden.

Die Figur 4 stellt schematisch und nicht maßstabsgerecht eine bevorzugte Anordnung eines zu vermessenden Objektes relativ zu der Vorrichtung gemäß Figur 3 dar. Das Bauelement 1 mit dreidimensionaler Gitterstruktur in Form eines Meßkäfigs wird nur angedeutet und deshalb mit dünnen Linien skizziert. An dem Bauelement 1 sind mehrere Verbindungsstege 3 angebracht sind, an deren dem Bauelement 1 abgewandter Seite jeweils eine Befestigungsvorrichtung 4 angebracht ist. Die Verbindungsstege 3 sind in diesem Ausführungsbeispiel nach innen ausgerichtet, und halten und fixieren das zu vermessende Objekt im Zentrum der Navigationskulisse. Dadurch ist auch die Unterseite des Objektes für die Vermessung zugänglich und keine Umpositionierung des Objektes für dessen vollständige Vermessung notwendig. Die Zugänglichkeit kann durch weitere Verbindungstege 5, die als Ständer dienen (in der Figur 4 gestrichelt angedeutet), erhöht werden.

Die erfindungsgemäße Vorrichtung erweist sich in dieser zweiten Ausführungsform als besonders geeignet für die optische, dreidimensionale Koordinaten-Meßtechnik kleiner Objekte mit Volumen in der Größenordnung bis zu circa einem Kubikmeter.

Die Erfindung ist nicht nur auf die zuvor geschilderten Ausführungsbeispiele beschränkt, sondern vielmehr auf weitere übertragbar.

So ist zum Beispiel denkbar, anstatt einer zweidimensionalen Gitterstruktur eine oder mehrere eindimensionale Gitterstrukturen zu verwenden. Eine solche eindimensionale Gitterstruktur könnte beispielsweise aus einer oder mehreren zusammengesetzten meßmarkenbreiten, ebenen Schienen (Elementarzellen) bestehen auf deren einer Seite mehrere Meßmarken angebracht sind. Dies wäre vor allem dann vorteilhaft, wenn der in der Umgebung des zu vermessenden Objektes zur Verfügung stehende Raum nur sehr begrenzt wäre und würde gleichzeitig die Transportfähigkeit der Vorrichtung weiter verbessern.

Außerdem wären auch andere dreidimensionale Gitterstrukturen vorstellbar, die beispielsweise weit aus dem zu vermessenden Objekt (z. B. eine Fahrzeugkarosserie) herausragende kleinere Teilobjekte (z. B. ein Außenspiegel) in Form eines (zumindest einseitig offenen) Käfigs umschließen. Ein solcher "Teil"-Käfig kann wesentlich kleiner sein als das zu vermessende Objekt und ist deshalb auf einfache Weise sowohl formstabil als auch transportabel zu konstruieren.

Ferner ist es möglich, daß die Gitterstruktur nicht rechtwinklig aus rechteckigen Elementarzellen aufgebaut ist, sondern beispielsweise aus Elementarzellen in der Form von gleichseitigen oder gleichschenkligen Dreiecken oder aus ganz anderen geometrischen Figuren.

Auch die Abmessungen der Vorrichtung, insbesondere die der Gitterstruktur und der Elementarzellen, sind nicht an die in diesem Ausführungsbeispiel genannten Werte gebunden. Vorstellbar sind sowohl Vorrichtungen mit anderen, festen Abmessungen, als auch Vorrichtungen, die Einstellmöglichkeiten für ihre Abmessungen aufweisen. Diese könnten beispielsweise aus gegeneinander verschiebbaren und arretierbaren Schienen aufgebaut sein.

Schließlich ist es vorstellbar, daß die Gitterstruktur anstatt aus Leichtmetall aus einem anderen leichten aber formstabilen Material aufgebaut ist, beispielsweise aus kohlenstofffaserverstärktem Kunststoff (CFK). Eine weitere Möglichkeit besteht im Aufbau aus einem formstabilen Drahtgeflecht, auf dem meßmarkengroße, ebene Platten in variablen Positionen befestigt werden.

Des weiteren kann jede Befestigungsvorrichtung Bestandteil der Vorrichtung sein, wenn sie nur auf eine einfache, das zu vermessende Objekt nicht beschädigende Weise wieder lösbar ist. Vorstellbar sind Saugnäpfe, Magnete, elektrostatische oder adhäsive Haftvorrichtungen oder bei geeigneten zu vermessenden Objekten auch mechanische Befestigungsvorrichtungen, beispielsweise in Form von Klemm-, Steck- oder Schraubverbindungen.

Außerdem ist es denkbar, die Meßmarken nicht nur auf einer Seite oder auf ausgewählten Seiten des Bauelementes anzubringen sondern auch auf mehreren oder auf allen Seiten. Dies kann insbesondere bei einem dreidimensionalen Bauelement vorteilhaft sein, bei dem sich das zu vermessende Objekt im Inneren befindet, und bei dem die Vermessung aus mehreren Raumrichtungen heraus, durch die Gitterstruktur des Bauelementes hindurch, durchaus auch Meßmarken auf der Innenseite des Bauelementes berücksichtigen kann.

## Patentansprüche

1. Navigationskulisse für die **optische** Vermessung von Objekten, die ein Bauelement (1) mit Gitterstruktur enthält,
- auf dem mehrere Meßmarken (2) angebracht sind,
- **dadurch gekennzeichnet, daß** am Bauelement (1) mehrere Verbindungsstege (3) angebracht sind, an deren dem Bauelement (1) abgewandter Seite jeweils eine Befestigungsvorrichtung (4) angebracht ist.

2. Navigationskulisse nach Anspruch 1,
**dadurch gekennzeichnet,**
- **daß** die Gitterstruktur ein-, zwei- oder drei-dimensional, vorzugsweise zwei-dimensional aufgebaut ist, und
- **daß** die Gitterstruktur aus mehreren, vorzugsweise gleichartigen, Elementarzellen (10) aufgebaut ist,
- deren räumliche Abmessungen variabel sind, und/oder
- deren Anzahl variabel ist.

3. Navigationskulisse nach einem der vorhergehenden Ansprüche,
**dadurch gekennzeichnet,**
**daß** die Gitterstruktur rechtwinklig aufgebaut ist.

4. Navigationskulisse nach einem der vorhergehenden Ansprüche,
**dadurch gekennzeichnet,**
**daß** die Gitterstruktur ebene Oberflächen besitzt,
- deren Mindestabmessungen gleich denen der Meßmarken (2) sind,
- deren Flächennormalen vorzugsweise parallel ausgerichtet sind.

5. Navigationskulisse nach einem der vorhergehenden Ansprüche,
**dadurch gekennzeichnet,**
**daß** die Gitterstruktur in Leichtbauweise ausgeführt ist, derart, daß sie
- aus mindestens meßmarkenbreiten Schienen aufgebaut ist, vorzugsweise bestehend aus
- Leichtmetall, vorzugsweise Aluminium, oder aus
- formstabilem Kunststoff, vorzugsweise aus kohlenstofffaserverstärktem Kunststoff,
oder daß sie
- aus einem formstabilen Drahtgeflecht aufgebaut ist, auf welchem meßmarkengroße, ebene Platten, vorzugsweise variabel in ihrer Positionierung, angebracht sind.

6. Navigationskulisse nach einem der vorhergehenden Ansprüche,
**dadurch gekennzeichnet,**
**daß** sie genau drei Verbindungsstege (3) enthält, welche
- vorzugsweise in möglichst großer Entfernung untereinander und
- vorzugsweise in möglichst großer radialer Entfernung vom Schwerpunkt der Gitterstruktur
auf der den Meßmarken 2 gegenüberliegenden Seite der Gitterstruktur an der Gitterstruktur angebracht sind.

7. Navigationskulisse nach einem der vorhergehenden Ansprüche,
**dadurch gekennzeichnet,**
**daß** die Verbindungsstege (3) jeweils beinhalten
- eine Einrichtung zur Einstellung und Arretierung ihrer räumlichen Ausrichtung relativ zur Gitterstruktur (31) und
- eine Einrichtung zur Einstellung und Arretierung ihrer Länge (32).

8. Navigationskulisse nach Anspruch 7,
**dadurch gekennzeichnet,**
- **daß** die Einrichtung zur Einstellung und Arretierung der räumlichen Ausrichtung eines Verbindungssteges relativ zur Gitterstruktur (31) ausgebildet ist in Form eines arretierbaren Kugelgelenkes, und/oder
- **daß** die Einrichtung zur Einstellung und Arretierung der Länge eines Verbindungssteges (32) ausgebildet ist in Form von
- gegeneinander verschiebbaren und arretierbaren Stangen oder
- ineinander verschiebbaren und arretierbaren Rohren.

9. Navigationskulisse nach einem der vorhergehenden Ansprüche,
**dadurch gekennzeichnet,**
**daß** die Befestigungsvorrichtung (4) an jedem Verbindungssteg (3)
- mit diesem verbunden ist über eine Einrichtung zur Einstellung und Arretierung ihrer räumlichen Ausrichtung (33), vorzugsweise über ein arretierbares Kugelgelenk.

10. Navigationskulisse nach einem der vorhergehenden Ansprüche,
**dadurch gekennzeichnet,**
**daß** die Befestigungsvorrichtung (4) an jedem Verbindungssteg (3) ausgebildet ist in Form
- von Saugnäpfen oder
- von einer magnetischen, elektrostatischen oder adhäsiven Haftvorrichtung oder
- von einer mechanischen Befestigungsvorrichtung, vorzugsweise in Form einer Klemm-, Steck-oder Schraubverbindung.

11. Verfahren zur optischen Vermessung von Objekten,
bei dem mehrere Teilmessungen der Objekte unter Verwendung einer Navigationskulisse zu einem Gesamtdatensatz zusammengefügt werden,
**dadurch gekennzeichnet,**
- **daß** eine Navigationskulisse nach einem der vorhergehenden Ansprüche verwendet wird, wenn das zu vermessende Objekt kleinere oder ähnliche Abmessungen aufweist wie die Vorrichtung, und
- **daß** mehrere Navigationskulissen nach einem der vorhergehenden Ansprüche verwendet werden, wenn die Abmessungen des zu vermessenden Objektes die Abmessungen der Navigationskulisse nach einem der vorhergehenden Ansprüche um ein Mehrfaches überschreiten.

12. Verfahren nach Anspruch 11,
**dadurch gekennzeichnet,**
- **daß** eine Navigationskulisse mit dreidimensionaler Gitterstruktur in Form eines Meßkäfigs verwendet wird und das zu vermessende Objekt mittels der Verbindungsstege (3) im Inneren der Navigationskulisse befestigt wird, wenn das zu vermessende Objekt eine räumliche Ausdehnung von circa 1 Kubikmeter nicht überschreitet.

## Claims

1. Navigation link for the optical measurement of objects, which contains a component (1) with a grid structure,
- on which there are a plurality of measuring marks (2),
- **characterized in that** on the component (1) there are a plurality of connecting webs (3), on whose side facing away from the component (1) in each case a fastening device (4) is attached.

2. Navigation link according to Claim 1, **characterized**
- **in that** the grid structure is of one-dimensional, two-dimensional or three-dimensional, preferably two-dimensional, design, and
- **in that** the grid structure is made up of a plurality of, preferably identical, elementary cells (10),
- whose spatial dimensions are variable, and/or
- whose number is variable.

3. Navigation link according to one of the preceding claims, **characterized in that** the grid structure is of right-angled design.

4. Navigation link according to one of the preceding claims, **characterized in that** the grid structure has planar surfaces,
- whose minimum dimensions are equal to those of the measuring marks (2),
- whose surface normals are preferably oriented in parallel.

5. Navigation link according to one of the preceding claims, **characterized in that** the grid structure is embodied using a lightweight design in such a way that it
- is composed of rails which are at least as wide as the measuring marks, preferably composed of
- lightweight metal, preferably aluminium, or of
- dimensionally stable plastic, preferably of carbon fibre-reinforced plastic,
or that it
- is composed of a dimensionally stable wire mesh on which planar panels which are as large as the measuring marks and are preferably variable in terms of their positioning are mounted.

6. Navigation link according to one of the preceding claims, **characterized in that** it contains precisely three connecting webs (3) which are mounted on the grid structure on its side opposite the measuring marks 2,
- said connecting webs (3) being preferably at the largest possible distance from one another and
- preferably at the largest possible distance from the centre of gravity of the grid structure.

7. Navigation link according to one of the preceding claims, **characterized in that** the connecting webs (3) each contain
- a device for setting and locking their spatia] orientation in relation to the grid structure (31) and
- a device for setting and locking their length (32).

8. Navigation link according to Claim 7, **characterized**
- **in that** the device for setting and locking the spatial orientation of a connecting web in relation to the grid structure (31) is embodied in the form of a lockable ball-and-socket joint, and/or
- **in that** the device for setting and locking the length of a connecting web (32) is embodied in the form of
- rods which can be displaced and locked with respect to one another or
- tubes which can be displaced and locked one inside the other.

9. Navigation link according to one of the preceding claims, **characterized in that** the fastening device (4) on each connecting web (3)
- is connected thereto by means of a device for setting and locking its spatial orientation (33), preferably by means of a lockable ball-and-socket joint.

10. Navigation link according to one of the preceding claims, **characterized in that** the fastening device (4) is constructed on each connecting web (3) in the form
- of suction cups or
- of a magnetic, electrostatic or adhesive attachment device or
- of a mechanical fastening device,
- preferably in the form of a clamping, plug-in or screw-type connection.

11. Method for optically measuring objects, in which a plurality of partial measurements of the objects are combined to form a composite data record using a navigation link, **characterized**
- **in that** a navigation link according to one of the preceding claims is used if the object to be measured has smaller or similar dimensions to the device, and
- **in that** a plurality of navigation links according to one of the preceding claims are used if the dimensions of the object to be measured exceed the dimensions of the navigation link according to one of the preceding claims by a multiple.

12. Method according to Claim 11, **characterized**
- **in that** a navigation link with a three-dimensional grid structure in the form of a measuring cage is used and the object to be measured is fastened in the interior of the navigation link by means of the connecting webs (3) if the object to be measured does not exceed a spatial extent of approximately 1 cubic metre.

## Revendications

1. Coulisse de navigation pour la mesure optique d'objets, laquelle comprend un élément porteur (1) ayant une structure en grille sur lequel se trouvent plusieurs repères de mesure (2), **caractérisée en ce que** plusieurs traverses de liaison (3) se trouvent sur l'élément porteur (1) sur le côté opposé à l'élément porteur (1) desquelles se trouve à chaque fois un dispositif de fixation (4).

2. Coulisse de navigation selon la revendication 1, **caractérisée en ce**
- **que** la structure en grille est unidimensionnelle, bidimensionnelle ou tridimensionnelle, de préférence bidimensionnelle, et
- **que** la structure en grille est constituée de plusieurs cellules élémentaires (10), de préférence du même type, dont les dimensions dans l'espace sont variables et/ou dont le nombre est variable.

3. Coulisse de navigation selon l'une des revendications précédentes, **caractérisée en ce que** la structure en grille est bâtie en angle droit.

4. Coulisse de navigation selon l'une des revendications précédentes, **caractérisée en ce que** la structure en grille possède une surface dont les dimensions minimales sont égales à celles des repères de mesure (2) et dont les normales de la surface sont de préférence parallèles.

5. Coulisse de navigation selon l'une des revendications précédentes, **caractérisée en ce que** la structure en grille est réalisée dans une construction légère de manière à ce qu'elle
- soit constituée de rails ayant au moins la largeur des repères de mesure, de préférence composés de
- métal léger, de préférence de l'aluminium, ou de
- matière plastique indéformable, de préférence une matière plastique renforcée de fibres de carbone,
ou qu'elle
- soit constituée d'un treillis en fils métalliques indéformable sur lequel se trouvent des plaquettes planes de la taille des repères de mesure, de préférence à position variable.

6. Coulisse de navigation selon l'une des revendications précédentes, **caractérisée en ce qu'**elle comprend exactement trois traverses de liaison (3) qui sont de préférence le plus éloignées possible les unes des autres et qui se trouvent de préférence à la plus grande distance radiale possible du centre de gravité de la structure en grille, sur la structure en grille sur le côté de la structure en grille qui est à l'opposé des repères de mesure 2.

7. Coulisse de navigation selon l'une des revendications précédentes, **caractérisée en ce que** les traverses de liaison (3) comprennent chacune un dispositif pour régler et bloquer leur orientation dans l'espace par rapport à la structure en grille (31) et un dispositif pour régler et bloquer leur longueur (32).

8. Coulisse de navigation selon la revendication 7, **caractérisée en ce**
- **que** le dispositif de réglage et de blocage de l'orientation dans l'espace d'une traverse de liaison par rapport à la structure en grille (31) est réalisé sous la forme d'une articulation à rotule blocable et/ou
- **que** le dispositif de réglage et de blocage de la longueur d'une traverse de liaison (32) est réalisé sous la forme de tiges coulissantes et blocables les unes par rapport aux autres ou de tubes coulissants et blocables les uns dans les autres.

9. Coulisse de navigation selon l'une des revendications précédentes, **caractérisée en ce que** le dispositif de fixation (4) sur chaque traverse de liaison (3) est relié à celle-ci par le biais d'un dispositif de réglage et de blocage de son orientation dans l'espace (33), de préférence par une articulation à rotule blocable.

10. Coulisse de navigation selon l'une des revendications précédentes, **caractérisée en ce que** le dispositif de fixation (4) sur chaque traverse de liaison (3) est réalisé sous la forme
- de ventouses ou
- d'un dispositif d'adhérence magnétique, électrostatique ou adhésif ou
- d'un dispositif de fixation mécanique, de préférence sous la forme d'une liaison à serrer, à enficher ou à visser.

11. Méthode pour la mesure optique d'objets avec laquelle plusieurs mesures partielles d'objets réalisées en utilisant une coulisse de navigation sont rassemblées pour former un ensemble de données global, **caractérisée en ce**
- **qu'**une coulisse de navigation selon l'une des revendications précédentes est utilisée si l'objet à mesurer présente des dimensions inférieures ou égales à celles du dispositif et
- **que** plusieurs coulisses de navigation selon l'une des revendications précédentes sont utilisées si les dimensions de l'objet à mesurer dépassent nettement les dimensions de la coulisse de navigation selon l'une des revendications précédentes.

12. Méthode selon la revendication 11, **caractérisée en ce qu'**une coulisse de navigation ayant une structure en grille tridimensionnelle sous la forme d'une cage de mesure est utilisée et que l'objet à mesurer est fixé à l'intérieur de la coulisse de navigation à l'aide de traverses de liaison (3) si l'objet à mesurer ne dépasse pas une dimension spatiale d'environ 1 mètre cube.
